# EUROPEAN PATENT APPLICATION

(11) **EP 4 550 442 A1**
(43) Date of publication of application: **07.05.2025**
(21) Application number: 23831280.5
(22) Date of filing: 22.06.2023
(51) Int. Cl.: H01M 4/13, H01M 4/133, H01M 4/134, H01M 4/36, H01M 4/38, H01M 4/48, H01M 4/587

(54) **NON-AQUEOUS ELECTROLYTE SECONDARY BATTERY**

(30) Priority: 29.06.2022 JP 2022105029
(71) Applicant: Panasonic Energy Co., Ltd., Osaka 570-8511 (JP)
(72) Inventor: KATOGI Akihiro, Kadoma-shi, Osaka 571-0057 (JP); TASHITA Takamitsu, Kadoma-shi, Osaka 571-0057 (JP); KANEKO Sachiyo, Kadoma-shi, Osaka 571-0057 (JP)
(74) Representative: Novagraaf International SA
(86) International application number: PCT/JP2023/023233
(87) International publication number: WO 2024/004836

(57) **Abstract**

This non-aqueous electrolyte secondary battery comprises a negative electrode (12). The negative electrode (12) has a negative electrode mixture layer (32) formed on the surface of a negative electrode current collector (30). The negative electrode mixture layer (32) has a first negative electrode mixture layer (32a) and a second negative electrode mixture layer (32b). The first negative electrode mixture layer (32a) and the second negative electrode mixture layer (32b) include a negative electrode active material. The negative electrode active material in the first negative electrode mixture layer (32a) has two negative electrode active materials M1 and M2 of different volume-average particle size. The ratio (A2/A1) of the volume-average particle size (A2) of the negative electrode active material M2 to the volume-average particle size (A1) of the negative electrode active material M1 is in the range of 0.16-0.5. The ratio (S2/S1) of the inter-particle porosity (S2) of the negative electrode active material in the second negative electrode mixture layer (32b) to the inter-particle porosity (S1) of the negative electrode active material in the first negative electrode mixture layer (32a) is in the range of 3.5-5.0.

## Description

### TECHNICAL FIELD

The present disclosure relates to a non-aqueous electrolyte secondary battery.

### BACKGROUND

A non-aqueous electrolyte secondary battery is widely used as a secondary battery having a high energy density. Patent Literature 1 discloses a technique in which, from the viewpoint of increasing capacity, a negative electrode mixture layer has a two-layer structure, with a porosity of a negative electrode mixture layer on the positive electrode side being larger than a porosity of a negative electrode mixture layer on the negative electrode current collector side.

### CITATION LIST

### PATENT LITERATURE

Patent Literature 1: JP 2003-77463 A

### SUMMARY

However, Patent Literature 1 does not consider charge-discharge cycle characteristics, and there is room for improvement.

Therefore, an object of the present disclosure is to provide a non-aqueous electrolyte secondary battery capable of suppressing a deterioration in charge-discharge cycle characteristic.

A non-aqueous electrolyte secondary battery according to an aspect of the present disclosure includes a positive electrode, a negative electrode, and a non-aqueous electrolyte, in which the negative electrode includes a negative electrode current collector, and a negative electrode mixture layer formed on a surface of the negative electrode current collector, the negative electrode mixture layer includes a first negative electrode mixture layer disposed on the negative electrode current collector, and a second negative electrode mixture layer disposed on the first negative electrode mixture layer, the first negative electrode mixture layer and the second negative electrode mixture layer contain a negative electrode active material, the negative electrode active material in the first negative electrode mixture layer has two negative electrode active materials M1 and M2 having different volume-average particle sizes, and a ratio (A2/A1) of the volume-average particle size (A2) of the negative electrode active material M2 to the volume-average particle size (A1) of the negative electrode active material M1 is in a range of 0.16 to 0.5, and a ratio (S2/S1) of an inter-particle porosity (S2) of the negative electrode active material in the second negative electrode mixture layer to an inter-particle porosity (S1) of the negative electrode active material in the first negative electrode mixture layer is in a range of 3.5 to 5.0.

The non-aqueous electrolyte secondary battery according to an aspect of the present disclosure is capable of suppressing a deterioration in charge-discharge cycle characteristic.

### BRIEF DESCRIPTION OF DRAWINGS

FIG. 1 is a cross-sectional view of a non-aqueous electrolyte secondary battery as an example of an embodiment.
FIG. 2 is a cross-sectional view of a negative electrode as an example of an embodiment.
FIG. 3 is a schematic view showing a cross section of a particle in a negative electrode active material.

### DESCRIPTION OF EMBODIMENTS

Hereinafter, examples of embodiments will be described in detail with reference to the drawings. Note that the non-aqueous electrolyte secondary battery of the present disclosure is not limited to the embodiments described below. The drawings referred to in the description of the embodiments are schematically illustrated.

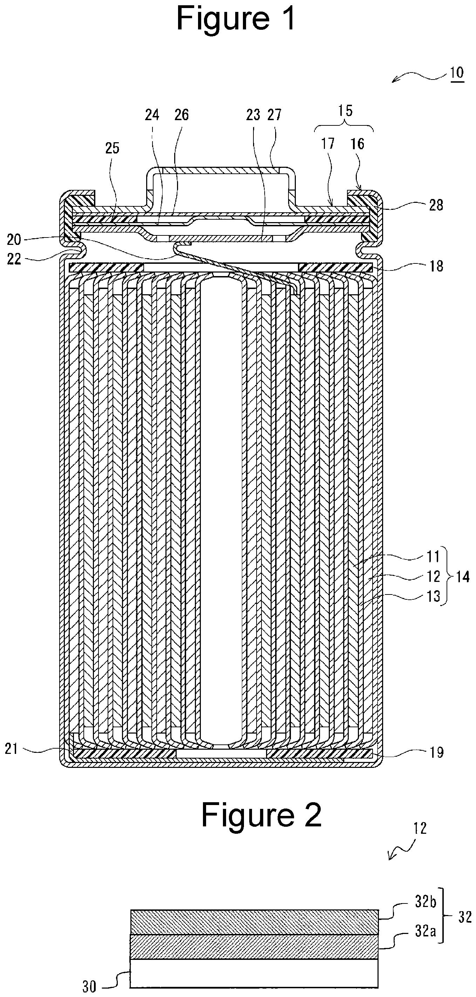

FIG. 1 is a cross-sectional view of a non-aqueous electrolyte secondary battery as an example of an embodiment. A non-aqueous electrolyte secondary battery 10 shown in FIG. 1 includes a wound-type electrode assembly 14 formed by winding a positive electrode 11 and a negative electrode 12 with a separator 13 interposed therebetween, a non-aqueous electrolyte, insulating plates 18 and 19 disposed on and under the electrode assembly 14, respectively, and a battery case 15 housing the above-described members therein. The battery case 15 includes a bottomed cylindrical case body 16 and a sealing assembly 17 that closes an opening of the case body 16. Instead of the wound-type electrode assembly 14, another type of electrode assembly, such as a stack-type electrode assembly in which positive electrodes and negative electrodes are alternately stacked with separators interposed therebetween, may be applied. Examples of the battery case 15 include a metal exterior housing can having a cylindrical shape, a square shape, a coin shape, a button shape, or the like, and a pouch exterior housing body formed by laminating a resin sheet and a metal sheet.

The case body 16 is, for example, a bottomed cylindrical metal exterior housing can. A gasket 28 is provided between the case body 16 and the sealing assembly 17 to ensure sealability inside the battery. The case body 16 has a projecting portion 22 in which, for example, a part of the side portion of the case body 16 projects inward to support the sealing assembly 17. The projecting portion 22 is preferably formed in an annular shape along the circumferential direction of the case body 16, and supports the sealing assembly 17 on an upper surface thereof.

The sealing assembly 17 has a structure in which a filter 23, a lower vent member 24, an insulating member 25, an upper vent member 26, and a cap 27 are stacked sequentially from the electrode assembly 14 side. Each member constituting the sealing assembly 17 has, for example, a disk shape or a ring shape, and the members excluding the insulating member 25 are electrically connected to each other. The lower vent member 24 and the upper vent member 26 are connected to each other at the respective central portions, and the insulating member 25 is interposed between the respective peripheral portions. When the internal pressure of the non-aqueous electrolyte secondary battery 10 increases due to heat generation caused by an internal short circuit or the like, for example, the lower vent member 24 is deformed to push up the upper vent member 26 toward the cap 27 side and breaks, and a current path between the lower vent member 24 and the upper vent member 26 is cut off. When the internal pressure further increases, the upper vent member 26 breaks, and gas is discharged from the opening of the cap 27.

In the non-aqueous electrolyte secondary battery 10 shown in FIG. 1, a positive electrode lead 20 attached to the positive electrode 11 extends through a through-hole of the insulating plate 18 toward the sealing assembly 17 side, and a negative electrode lead 21 attached to the negative electrode 12 extends through the outside of the insulating plate 19 toward the bottom side of the case body 16. The positive electrode lead 20 is connected to a lower surface of the filter 23, which is a bottom plate of the sealing assembly 17, by welding or the like, and the cap 27, which is a top plate of the sealing assembly 17 electrically connected to the filter 23, serves as a positive electrode terminal. The negative electrode lead 21 is connected to a bottom inner surface of the case body 16 by welding or the like, and the case body 16 serves as a negative electrode terminal.

Hereinafter, each component of the non-aqueous electrolyte secondary battery 10 will be described in detail.

### [Negative Electrode]

FIG. 2 is a cross-sectional view of a negative electrode as an example of an embodiment. As shown in FIG. 2, the negative electrode 12 includes a negative electrode current collector 30 and a negative electrode mixture layer 32 formed on a surface of the negative electrode current collector 30.

As the negative electrode current collector 30, for example, a foil of a metal that is stable in a potential range of the negative electrode 12, such as copper, a film in which the metal is disposed on a surface layer thereof, or the like is used. The thickness of the negative electrode current collector 30 is, for example, greater than or equal to 5 µm and less than or equal to 30 µm.

The negative electrode mixture layer 32 includes a first negative electrode mixture layer 32a disposed on the negative electrode current collector 30 and a second negative electrode mixture layer 32b disposed on the first negative electrode mixture layer 32a. The first negative electrode mixture layer 32a and the second negative electrode mixture layer 32b contain a negative electrode active material.

The negative electrode active material is not particularly limited as long as it is a material capable of occluding and releasing lithium ions, and examples thereof include a carbon material such as graphite, such as natural graphite and artificial graphite, or non-graphitizable carbon, and an element capable of forming an alloy with lithium or a compound containing the element. Examples of the element capable of forming an alloy with lithium or the compound containing the element include Si-based materials such as Si, an alloy containing Si, a Si oxide represented by SiOₓ (0.5 ≤ x ≤ 1.6), and a Si-containing material in which Si fine particles are dispersed in a lithium silicate phase represented by Li_{2y}SiO_{(2+y)} (0 < y < 2). Other examples include a Sn-based material such as Sn, an alloy containing Sn, or a tin oxide, and a Ti-based material such as a lithium titanate.

The negative electrode active material contained in the first negative electrode mixture layer 32a has two negative electrode active materials M1 and M2 having different volume-average particle sizes, and a ratio (A2/A1) of a volume-average particle size (A2) of the negative electrode active material M2 to a volume-average particle size (A1) of the negative electrode active material M1 is in the range of 0.16 to 0.5, preferably in the range of 0.3 to 0.5. A ratio (S2/S1) of an inter-particle porosity (S2) of the negative electrode active material in the second negative electrode mixture layer 32b to an inter-particle porosity (S1) of the negative electrode active material in the first negative electrode mixture layer 32a is in the range of 3.5 to 5.0. By setting A2/A1 and S2/S1 within the above-described ranges, the following assumptions are made.

When S2/S1 is in the range of 3.5 to 5.0, many inter-particle pores exist in the second negative electrode mixture layer 32b, which improves the permeability of the non-aqueous electrolyte into the negative electrode mixture layer 32. In addition, by setting A2/A1 in the range of 0.16 to 0.5 in the first negative electrode mixture layer 32a, the negative electrode active material in the first negative electrode mixture layer 32a is easily clogged when the negative electrode 12 is formed, and inter-particle pores of the negative electrode active material in the first negative electrode mixture layer 32a are reduced, thereby increasing inter-particle pores in the second negative electrode mixture layer 32b, which further improves the permeability of the non-aqueous electrolyte into the negative electrode mixture layer 32. Consequently, a deterioration in charge-discharge cycle characteristic is suppressed in the present embodiment. In the first negative electrode mixture layer 32a, when A2/A1 is in the range of 0.16 to 0.5, the surface area of the surface of the first negative electrode mixture layer 32a facing the second negative electrode mixture layer 32b becomes large, increasing the contact area between the second negative electrode mixture layer 32b and the first negative electrode mixture layer 32a. It is considered that the increase in contact area between the second negative electrode mixture layer 32b and the first negative electrode mixture layer 32a improves the adhesiveness between the second negative electrode mixture layer 32b and the first negative electrode mixture layer 32a, and ultimately contributes to suppressing a deterioration in charge-discharge cycle characteristic.

The volume-average particle sizes of the negative electrode active materials M1 and M2 are measured using a laser diffraction/scattering particle size distribution measuring apparatus (MT3000II manufactured by MicrotracBEL). The volume-average particle size means a median size at which a volume integrated value is 50% in a particle size distribution measured by the apparatus. The inter-particle porosity of the negative electrode active material is a two-dimensional value determined from a ratio of an area of inter-particle pores of the negative electrode active material to a cross-sectional area of the negative electrode mixture layer 32. S2/S1 is determined by calculating an inter-particle porosity S1 of the negative electrode active material in the first negative electrode mixture layer 32a and an inter-particle porosity S2 of the negative electrode active material in the second negative electrode mixture layer 32b in the following procedure.

### <Method of Measuring Inter-Particle Porosity of Negative Electrode Active Material>

(1) A cross section of the negative electrode mixture layer 32 is exposed. Examples of the method of exposing the cross section include a method in which the cross section of the negative electrode mixture layer 32 is exposed by cutting a part of the negative electrode 12 and machining the cut part with an ion milling apparatus (e.g., IM4000PLUS manufactured by Hitachi High-Tech Corporation).
(2) Using a scanning electron microscope, a reflected electron image of the exposed cross section of the negative electrode mixture layer 32 is captured for each of the first negative electrode mixture layer 32a and the second negative electrode mixture layer 32b. A magnification when the reflected electron image is captured is, for example, 800 times.
(3) The cross-sectional image acquired as described above is taken into a computer, and binarized using image analyzing software (e.g., ImageJ manufactured by National Institutes of Health, USA) to obtain a binarized image in which cross sections of particles in the cross-sectional image are converted into black color and pores between the particles and pores existing in the cross sections of the particles are converted into white color.
(4) In each of the binarized images of the first negative electrode mixture layer 32a and the second negative electrode mixture layer 32b, an area of inter-particle pores of the negative electrode active material is calculated, the inter-particle pores of the negative electrode active material referring to a portion excluding an internal pore of the negative electrode active material to be described later and an external pore of the negative electrode active material to be described later among the pores converted into white color. The inter-particle porosity of the negative electrode active material can be calculated based on the following equation. Inter-particle porosity (%) of negative electrode active material = area of pores between particles of negative electrode active material/area of cross section of negative electrode mixture layer × 100
(5) each of S1 and S2 is determined as an average of values obtained by performing the above-described measurement three times.

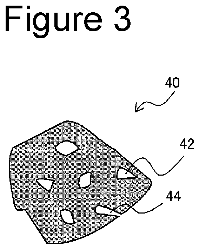

FIG. 3 is a schematic view showing a cross section of a particle in a negative electrode active material. As shown in FIG. 3, a negative electrode active material 40 has a closed pore 42 that is not connected to a surface of a particle from the inside of the particle and a released pore 44 that is connected to the surface of the particle from the inside of the particle in the cross section of the particle. In the present disclosure, the closed pore 42 in FIG. 3 is defined as an internal pore of the negative electrode active material described above, and the released pore 44 in FIG. 3 is defined as an external pore of the negative electrode active material described above. An area of the cross sections of the particles in the negative electrode active material and an area of the internal pores of the cross sections of the particles in the negative electrode active material are calculated from the above-described binarized image, and an internal particle porosity of the negative electrode active material can be calculated from the following equation. In addition, among the pores existing in the cross sections of the particles, a pore having a width of less than or equal to 3 µm may be difficult to determine as to whether the pore is an internal pore or an external pore during image analysis, and thus, the pore having a width of less than or equal to 3 µm may be determined as internal pore.

Internal particle porosity = area of internal pores of cross sections of particles in negative electrode active material × 100/area of cross sections of particles in negative electrode active material

Examples of the method of adjusting the inter-particle porosity of the negative electrode active material in the first negative electrode mixture layer 32a and the second negative electrode mixture layer 32b include a method of adjusting a packing density of the negative electrode mixture layer 32 and a method of adjusting the internal porosity of the negative electrode active material.

### <Method of Adjusting Packing Density of Negative Electrode Mixture Layer 32>

For example, by setting the volume-average particle size of the negative electrode active material M1 contained in the first negative electrode mixture layer 32a to be equal to or smaller than the volume-average particle size of the negative electrode active material contained in the second negative electrode mixture layer 32b, the packing density of the first negative electrode mixture layer 32a can be higher than the packing density of the second negative electrode mixture layer 32b. Accordingly, S2/S1 can be increased. Even though the volume-average particle size of the negative electrode active material M1 contained in the first negative electrode mixture layer 32a is equal to the volume-average particle size of the negative electrode active material contained in the second negative electrode mixture layer 32b, since voids in the negative electrode active material M1 of the first negative electrode mixture layer 32a are filled with the negative electrode active material M2 having a smaller volume-average particle size than the negative electrode active material M1, the filling density of the first negative electrode mixture layer 32a is higher than the filling density of the second negative electrode mixture layer 32b. The volume-average particle size of the negative electrode active material M1 is, for example, preferably in the range of 15 µm to 30 µm, and more preferably in the range of 17 µm to 25 µm. In addition, the volume-average particle size of the negative electrode active material contained in the second negative electrode mixture layer 32b is, for example, preferably in the range of 15 µm to 30 µm, and more preferably in the range of 17 µm to 25 µm.

In addition, the packing density of the first negative electrode mixture layer 32a can be higher than the packing density of the second negative electrode mixture layer 32b, for example, by rolling the first negative electrode mixture layer 32a with a larger force than the second negative electrode mixture layer 32b when the negative electrode mixture layer 32 is rolled in the production of the negative electrode 12. By such a method as well, S2/S1 can be increased.

### <Method of Adjusting Internal Porosity of Negative Electrode Active Material>

For example, the internal porosity of the negative electrode active material contained in the second negative electrode mixture layer 32b is set to be smaller than that of the negative electrode active material (the negative electrode active material M1 and the negative electrode active material M2) contained in the first negative electrode mixture layer 32a. As a result, S2/S 1 can be increased. In a case where S2/S1 is controlled by adjusting the internal porosity, it is preferable that the negative electrode active material in the second negative electrode mixture layer 32b contains graphite particles, and the negative electrode active materials M1 and M2 in the first negative electrode mixture layer 32a are graphite particles from the viewpoint of easily adjusting the internal porosity of the negative electrode active material. Then, it is preferable to control S2/S 1 by adjusting the internal porosity of these graphite particles.

The negative electrode active materials M1 and M2 in the first negative electrode mixture layer 32a are preferably graphite particles having a high internal porosity. The internal porosity of the graphite particles is, for example, preferably greater than or equal to 8% and less than or equal to 20%, more preferably greater than or equal to 10% and less than or equal to 18%, and particularly preferably greater than or equal to 12% and less than or equal to 16%. The graphite particles having a high internal porosity can be produced, for example, as follows. The main raw material, coke (precursor), is pulverized to a predetermined size, the pulverized coke is agglomerated with a binding agent, the aggregate is press-molded into a block shape, and in this state, the aggregate is then fired at a temperature of higher than or equal to 2,600°C for graphitization. The block-shaped molded body after graphitization is pulverized and sieved to obtain graphite particles having desired sizes (that is, negative electrode active materials M1 and M2 having different volume-average particle sizes). Here, by increasing the amount of volatile component added to the block-shaped molded body, the internal porosity of the graphite particles can be increased (for example, in the range of 8% to 20%). Regarding the internal porosity of the graphite particles contained in the first negative electrode mixture layer 32a, when a part of the binding agent added to the coke (precursor) is volatilized during firing, the binding agent can be used as a volatile component. Examples of such a binding agent include pitch.

The negative electrode active material contained in the second negative electrode mixture layer 32b preferably contains graphite particles having a low internal porosity. The internal porosity of the graphite particles is, for example, preferably less than or equal to 5%, more preferably greater than or equal to 1% and less than or equal to 5%, and particularly preferably greater than or equal to 3% and less than or equal to 5%. The graphite particles having a low internal porosity can be produced, for example, as follows. The main raw material, coke (precursor), is pulverized to a predetermined size, the pulverized coke is agglomerated with a binding agent, and in this state, the aggregate is fired at a temperature of higher than or equal to 2,600°C for graphitization, and then sieved to obtain graphite particles having a desired size. Here, the internal porosity of the graphite particles may be adjusted by a particle size of the precursor after being pulverized, a particle size of the precursor in the aggregated state, or the like. For example, by increasing the particle size of the precursor after being pulverized or the particle size of the precursor in the aggregated state, the internal porosity of the graphite particles can be reduced (e.g., less than or equal to 5%).

The first negative electrode mixture layer 32a may contain graphite particles having a low internal porosity (e.g., less than or equal to 5%), but the internal porosity is preferably less than or equal to 20 mass%, and more preferably 0%, with respect to the total mass of the negative electrode active material. The second negative electrode mixture layer 32b may contain graphite particles having a high internal porosity (e.g., greater than or equal to 8% and less than or equal to 20%), but the internal porosity is preferably less than 50 mass%, and more preferably less than or equal to 35 mass%, with respect to the total mass of the negative electrode active material.

A plane spacing (d₀₀₂) of a (002) plane determined by a wide angle X-ray diffraction method for the graphite particles is, for example, preferably greater than or equal to 0.3354 nm and more preferably greater than or equal to 0.3357 nm, and preferably less than 0.340 nm and more preferably less than or equal to 0.338 nm. In addition, a crystallite size (Lc(002)) determined by an X-ray diffraction method for the graphite particles is, for example, preferably greater than or equal to 5 nm and more preferably greater than or equal to 10 nm, and preferably less than or equal to 300 nm and more preferably less than or equal to 200 nm. When the plane spacing (d₀₀₂) and the crystallite size (Lc(002)) satisfy the above-described ranges, the battery capacity tends to be larger than that when the plane spacing (d₀₀₂) and the crystallite size (Lc(002)) do not satisfy the above-described ranges.

The negative electrode active material preferably contains, for example, a Si-based material from the viewpoint of increasing the capacity of the battery. From the viewpoint of increasing the capacity of the battery, the Si-based material includes SiOₓ (0.5 ≤ x ≤ 1.6), and the ratio of SiOₓ (0.5 ≤ x ≤ 1.6) to the total mass of the negative electrode active material contained in the negative electrode mixture layer 32 is preferably greater than or equal to 1 mass% and less than or equal to 10 mass%, and more preferably greater than or equal to 3 mass% and less than or equal to 7 mass%.

The negative electrode mixture layer 32 may contain a conductive agent. Examples of the conductive agent include carbon materials such as carbon black (CB), acetylene black (AB), Ketjenblack, graphite, and carbon nanotube. Among them, one type may be used alone, or two or more types may be used in combination.

The negative electrode mixture layer 32 may further contain a binding agent. Examples of the binding agent include a fluorine-based resin, a polyimide-based resin, an acryl-based resin, a polyolefin-based resin, polyacrylonitrile (PAN), styrene-butadiene rubber (SBR), nitrile-butadiene rubber (NBR), carboxymethyl cellulose (CMC) or a salt thereof, polyacrylic acid (PAA) or a salt thereof (PAA-Na, PAA-K, or the like, or a partially neutralized salt may be used), and polyvinyl alcohol (PVA). Among them, one type may be used alone, or two or more types may be used in combination.

The thickness of the first negative electrode mixture layer 32a and the thickness of the second negative electrode mixture layer 32b may be identical or different. The ratio of the thickness of the second negative electrode mixture layer 32b to the thickness of the first negative electrode mixture layer 32a is preferably 2:8 to 5:5, and more preferably 2:8 to 4:6. The sum of the thickness of the first negative electrode mixture layer and the thickness of the second negative electrode mixture layer 32b is preferably in the range of 75 µm to 300 µm.

Next, an example of a method of producing the negative electrode 12 according to the present embodiment will be described. First, a first negative electrode mixture slurry is prepared by mixing two negative electrode active materials M1 and M2 having different volume-average particle sizes, a binding agent, and a solvent such as water. Separately therefrom, a second negative electrode mixture slurry is prepared by mixing a negative electrode active material, a binding agent, and a solvent such as water. Then, the first negative electrode mixture slurry is applied onto both surfaces of the negative electrode current collector and dried, and then the second negative electrode mixture slurry is applied onto both surfaces of the coating formed by the first negative electrode mixture slurry and dried. Furthermore, by rolling the first negative electrode mixture layer 32a and the second negative electrode mixture layer 32b with a roller, the negative electrode 12 in which the negative electrode mixture layer 32 is formed on the negative electrode current collector 30 can be produced. In the above-described method, the second negative electrode mixture slurry is applied after the first negative electrode mixture slurry is applied and dried. However, the second negative electrode mixture slurry may be applied before the first negative electrode mixture slurry is dried after the first negative electrode mixture slurry is applied. In addition, after the first negative electrode mixture slurry is applied, dried, and rolled, the second negative electrode mixture slurry may be applied onto the first negative electrode mixture layer 32a.

By changing the rolling conditions of the first negative electrode mixture layer 32a and the second negative electrode mixture layer 32b, the respective packing densities can be more freely adjusted. Even when the first negative electrode mixture layer 32a and the second negative electrode mixture layer 32b are simultaneously rolled as described above, the inter-particle porosities of the respective negative electrode active materials are not the same. As described above, the inter-particle porosities (S1, S2) of the negative electrode active materials of the first negative electrode mixture layer 32a and the second negative electrode mixture layer 32b can be adjusted, for example, by adjusting the volume-average particle sizes or the internal porosities of the negative electrode active materials used in the first negative electrode mixture layer 32a and the second negative electrode mixture layer 32b.

### [Positive Electrode]

The positive electrode 11 includes a positive electrode current collector such as a metal foil, and a positive electrode mixture layer formed on the positive electrode current collector. As the positive electrode current collector, a foil of a metal that is stable in a potential range of the positive electrode, such as aluminum, a film in which the metal is disposed on a surface layer thereof, or the like can be used. The positive electrode mixture layer contains, for example, a positive electrode active material, a binding agent, a conductive agent, etc. The positive electrode 11 can be produced, for example, by applying a positive electrode mixture slurry containing a positive electrode active material, a binding agent, a conductive agent, etc. onto a positive electrode current collector, drying the positive electrode mixture slurry to form a positive electrode mixture layer, and then rolling the positive electrode mixture layer.

Examples of the positive electrode active material include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{l-y}O₂, LiₓCo_{y}M_{1-y}O_{z}, LiₓNi_{1-y}M_{y}O_{z}, LiₓMn₂O₄, LiₓMn_{2-y}MyO₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). Among them, one type may be used alone, or a plurality of types may be used in combination. The positive electrode active material preferably contains a lithium nickel composite oxide such as LiₓNiO₂, LiₓCo_{y}Ni_{1-y}O₂, or LiₓNi_{1-y}M_{y}O_{z} (M is at least one of Na, Mg, Sc, Y, Mn, Fe, Co, Ni, Cu, Zn, Al, Cr, Pb, Sb, and B, 0 <x ≤ 1.2, 0 < y ≤ 0.9, and 2.0 ≤ z ≤ 2.3) from the viewpoint of achieving the high capacity of the non-aqueous electrolyte secondary battery.

Examples of the conductive agent include carbon particles such as carbon black (CB), acetylene black (AB), Ketjenblack, carbon nanotube (CNT), graphene, and graphite. Among them, one type may be used alone, or two or more types may be used in combination.

Examples of the binding agent include a fluorine-based resin such as polytetrafluoroethylene (PTFE) or polyvinylidene fluoride (PVdF), a polyimide-based resin, an acryl-based resin, a polyolefin-based resin, and polyacrylonitrile (PAN). Among them, one type may be used alone, or two or more types may be used in combination.

### [Separator]

As the separator 13, for example, a porous sheet having an ion permeation property and an insulation property is used. Specific examples of the porous sheet include a microporous thin film, a woven fabric, and a nonwoven fabric. As a material of the separator, an olefin-based resin such as polyethylene or polypropylene, cellulose, or the like is suitable. The separator 13 may be a laminate including a cellulose fiber layer and a thermoplastic resin fiber layer formed of an olefin-based resin or the like. Further, the separator 13 may be a multi-layer separator including a polyethylene layer and a polypropylene layer, or the separator 13 with a material such as an aramid-based resin or ceramic applied onto the surface thereof may be used.

### [Non-Aqueous Electrolyte]

The non-aqueous electrolyte is a liquid electrolyte (electrolytic solution) containing a non-aqueous solvent and an electrolyte salt dissolved in the non-aqueous solvent. As the non-aqueous solvent, for example, an ester, an ether, a nitrile such as acetonitrile, an amide such as dimethylformamide, a mixed solvent of two or more thereof, or the like can be used. The non-aqueous solvent may contain a halogen-substituted product in which at least some of hydrogen in any of the solvents described above is substituted with a halogen atom such as fluorine.

Examples of the ester include a cyclic carbonic acid ester such as ethylene carbonate (EC), propylene carbonate (PC), or butylene carbonate, a chain carbonic acid ester such as dimethyl carbonate (DMC), ethyl methyl carbonate (EMC), diethyl carbonate (DEC), methyl propyl carbonate, ethyl propyl carbonate, or methyl isopropyl carbonate, a cyclic carboxylic acid ester such as γ-butyrolactone or γ-valerolactone, and a chain carboxylic acid ester such as methyl acetate, ethyl acetate, propyl acetate, methyl propionate (MP), or ethyl propionate.

Examples of the ether include a cyclic ether such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, or crown ether, and a chain ether such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, or tetraethylene glycol dimethyl ether.

As the halogen-substituted product, a fluorinated cyclic carbonic acid ester such as fluoroethylene carbonate (FEC), a fluorinated chain carbonic acid ester, a fluorinated chain carboxylic acid ester such as methyl fluoropropionate (FMP), or the like is preferably used.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, and n is 1 or 2), LiB₁₀Cl₁₀, LiCl, LiBr, LiI, chloroborane lithium, lithium lower aliphatic carboxylate, a borate such as Li₂B₄O₇ or Li(B(C₂O₄)F₂), and an imide salt such as LiN(SO₂CF₃)₂ or LiN(C₁F₂ₗ₊₁SO₂)(CₘF₂ₘ₊₁SO₂) {l and m are integers of greater than or equal to 1}. Among these lithium salts, one type may be used alone, or a plurality of types may be used in combination. Among these lithium salts, LiPF₆ is preferably used from the viewpoints of ion conductivity, electrochemical stability, and the like. The concentration of the lithium salt is preferably greater than or equal to 0.8 mol and less than or equal to 1.8 mol per L of the solvent.

### EXAMPLES

Hereinafter, the present disclosure will be further described with reference to examples, but the present disclosure is not limited to these examples.

### <Example 1>

### [Production of Positive Electrode]

As a positive electrode active material, a powdered lithium transition metal oxide represented by LiCo_{0.979}Zr_{0.001}Mg_{0.01}Al_{0.01}O₂ was used. A positive electrode mixture slurry was prepared by mixing 95 parts by mass of the positive electrode active material, 2.5 parts by mass of acetylene black (AB) as a conductive agent, and 2.5 parts by mass of polyvinylidene fluoride powder as a binding agent, and further adding an appropriate amount of N-methyl-2-pyrrolidone (NMP). A positive electrode in which positive electrode mixture layers were formed on both surfaces of a positive electrode current collector made of an aluminum foil (having a thickness of 15 µm) was produced by applying the slurry onto both surfaces of the positive electrode current collector using a doctor blade method, drying the coating, and then rolling the coating.

### [Graphite Particles A: Production of Graphite Particles M1 and M2]

Coke was pulverized until the average particle size (D50) reached 17 µm, and pitch was added as a binding agent to the pulverized coke to aggregate the coke. An isotropic pressure was applied to the aggregate to produce a block-shaped molded body having a density of 1.6 g/cm³ to 1.9 g/cm³. The block-shaped molded body was fired at a temperature of 2,800°C for graphitization, and then the graphitized block-shaped molded body was pulverized and sieved to obtain graphite particles M1 having a volume-average particle size (D50) of 24 µm and graphite particles M2 having a volume-average particle size (D50) of 12 µm.

The graphite particles M1 and the graphite particles M2 were mixed at a mass ratio of 8:2. These particles were used as graphite particles A.

### [Production of Graphite Particles B]

Coke was pulverized until the average particle size (D50) reached 13 µm, pitch was added as a binding agent to the pulverized coke, and the pulverized coke was aggregated until the average particle size (D50) reached 18 µm. This aggregate was fired at a temperature of 2,800°C for graphitization. Next, the graphitized block-shaped molded body was pulverized and sieved to obtain graphite particles B having a volume-average particle size (D50) of 24 µm.

### [Production of Negative Electrode]

A first negative electrode active material was obtained by mixing the graphite particles A and SiO at a mass ratio of 95:5. A first negative electrode mixture slurry was prepared by mixing 100 parts by mass of the first negative electrode active material, 1 part by mass of sodium salt of carboxymethyl cellulose (CMC-Na), and 1 part by mass of styrene-butadiene copolymer rubber (SBR), and kneading the mixture in water.

A second negative electrode active material was obtained by mixing mixed graphite and SiO at a mass ratio of 95:5, the mixed graphite being obtained by mixing 34 parts by mass of the graphite particles A and 66 parts by mass of the graphite particles B. A second negative electrode mixture slurry was prepared by mixing 100 parts by mass of the second negative electrode active material, 1 part by mass of CMC-Na, 1 part by mass of SBR, and 0.02 parts by mass of single-walled carbon nanotube (SWCNT), and kneading the mixture in water.

A first negative electrode mixture layer was formed by applying the first negative electrode mixture slurry onto both surfaces of a negative electrode current collector made of a copper foil using a doctor blade method, and drying the first negative electrode mixture slurry. Further, a second negative electrode mixture layer was formed by applying the second negative electrode mixture slurry onto the first negative electrode mixture layer, and drying the second negative electrode mixture slurry. A negative electrode was produced by rolling the first negative electrode mixture layer and the second negative electrode mixture layer with a roller. The thickness ratio of the second negative electrode mixture layer to the first negative electrode mixture layer of the produced negative electrode was 3.5:6.5.

### [Production of Non-Aqueous Electrolyte]

A non-aqueous electrolyte was obtained by dissolving LiPF₆ at a concentration of 1.0 mol/L in 100 parts by mass of a non-aqueous solvent obtained by mixing ethylene carbonate (EC), propylene carbonate (PC), and ethyl methyl carbonate (EMC) at a volume ratio of 10:10:80.

### [Production of Test Cell]

A flat wound-type electrode assembly was produced by spirally winding the positive electrode and the negative electrode with the separator made of polyolefin interposed therebetween, in a state where a positive electrode lead made of aluminum was attached to the positive electrode current collector, and a negative electrode lead made of nickel was attached to the negative electrode current collector, followed by press molding in the radial direction. The electrode assembly was housed in an exterior housing body formed of an aluminum laminate sheet, the non-aqueous electrolyte was injected, and then an opening of the exterior housing body was sealed to obtain a test cell having a height of 62 mm, a width of 35 mm, and a thickness of 3.6 mm.

### <Example 2>

A test cell was produced in the same manner as in Example 1, except that the graphitized block-shaped molded body was pulverized and sieved to obtain graphite particles M1 having a volume-average particle size (D50) of 24 µm and graphite particles M2 having a volume-average particle size (D50) of 8 µm in the production of the graphite particles A, and mixed graphite obtained by mixing 25 parts by mass of the graphite particles A and 75 parts by mass of the graphite particles B was used as the mixed graphite in the production of the second negative electrode mixture slurry.

### <Example 3>

A test cell was produced in the same manner as in Example 2, except that the graphite particles A were not used in the production of the second negative electrode mixture slurry.

### <Example 4>

A test cell was produced in the same manner as in Example 1, except that the graphitized block-shaped molded body was pulverized and sieved to obtain graphite particles M1 having a volume-average particle size (D50) of 24 µm and graphite particles M2 having a volume-average particle size (D50) of 8 µm in the production of the graphite particles A.

### <Example 5>

A test cell was produced in the same manner as in Example 1, except that the graphitized block-shaped molded body was pulverized and sieved to obtain graphite particles M1 having a volume-average particle size (D50) of 24 µm and graphite particles M2 having a volume-average particle size (D50) of 4 µm in the production of the graphite particles A.

### <Comparative Example 1>

A test cell was produced in the same manner as in Example 1, except that a first negative electrode active material obtained by mixing mixed graphite and SiO at a mass ratio of 95:5, the mixed graphite being obtained by mixing graphite particles M1 having a volume-average particle size (D50) of 24 µm and graphite particles B at a mass ratio of 50:50, was used in the preparation of the first negative electrode mixture slurry, and a second negative electrode active material obtained by mixing mixed graphite and SiO at a mass ratio of 95:5, the mixed graphite being obtained by mixing graphite particles M1 having a volume-average particle size (D50) of 24 µm and graphite particles B at a mass ratio of 50:50, was used in the preparation of the second negative electrode mixture layer slurry.

### <Comparative Example 2>

A test cell was produced in the same manner as in Example 1, except that a first negative electrode active material obtained by mixing graphite particles M1 having a volume-average particle size (D50) of 24 µm and SiO at a mass ratio of 95:5 was used in the preparation of the first negative electrode mixture slurry, and a second negative electrode active material obtained by mixing mixed graphite and SiO at a mass ratio of 95:5, the mixed graphite being obtained by mixing graphite particles M1 having a volume-average particle size (D50) of 24 µm and graphite particles B at a mass ratio of 60:40, was used in the preparation of the second negative electrode mixture layer slurry.

### <Comparative Example 3>

A test cell was produced in the same manner as in Example 1, except that a first negative electrode active material obtained by mixing graphite particles M1 having a volume-average particle size (D50) of 24 µm and SiO at a mass ratio of 95:5 was used in the preparation of the first negative electrode mixture slurry, and a second negative electrode active material obtained by mixing mixed graphite and SiO at a mass ratio of 95:5, the mixed graphite being obtained by mixing graphite particles M1 having a volume-average particle size (D50) of 24 µm and graphite particles B at a mass ratio of 34:66, was used in the preparation of the second negative electrode mixture layer slurry.

### <Comparative Example 4>

A test cell was produced in the same manner as in Example 1, except that a first negative electrode active material obtained by mixing graphite particles M1 having a volume-average particle size (D50) of 24 µm and SiO at a mass ratio of 95:5 was used in the preparation of the first negative electrode mixture slurry, and a second negative electrode active material obtained by mixing mixed graphite and SiO at a mass ratio of 95:5, the mixed graphite being obtained by mixing graphite particles M1 having a volume-average particle size (D50) of 24 µm and graphite particles B at a mass ratio of 25:75, was used in the preparation of the second negative electrode mixture layer slurry.

### <Comparative Example 5>

A test cell was produced in the same manner as in Example 1, except that a first negative electrode active material obtained by mixing graphite particles M1 having a volume-average particle size (D50) of 24 µm and SiO at a mass ratio of 95:5 was used in the preparation of the first negative electrode mixture slurry, and a second negative electrode active material obtained by mixing graphite particles B and SiO at a mass ratio of 95:5 was used in the preparation of the second negative electrode mixture layer slurry.

### <Comparative Example 6>

A test cell was produced in the same manner as in Example 1, except that the graphitized block-shaped molded body was pulverized and sieved to obtain graphite particles M1 having a volume-average particle size (D50) of 24 µm and graphite particles M2 having a volume-average particle size (D50) of 18 µm in the production of the graphite particles A.

### <Comparative Example 7>

A test cell was produced in the same manner as in Example 1, except that the graphitized block-shaped molded body was pulverized and sieved to obtain graphite particles M1 having a volume-average particle size (D50) of 24 µm and graphite particles M2 having a volume-average particle size (D50) of 2 µm in the production of the graphite particles A.

### [Evaluation of Inter-Particle Porosity of Negative Electrode Active Material]

Under an environmental temperature of 25°C, the test cell of each of the examples and the comparative examples was charged at a constant current of 0.2 C until 4.2 V is reached, and then charged at a constant voltage of 4.2 V until 1/50 C is reached. Thereafter, the test cell was discharged at a constant current of 0.2 C until 2.5 V is reached. This charging/discharging was defined as one cycle, and five cycles were performed. The negative electrode was taken out from the test cell of each of the examples and the comparative examples after the five cycles, and an inter-particle porosity of the negative electrode active material was calculated. The calculation method was as described above. When the number of charge-discharge cycles is too large, the inter-particle porosity of the negative electrode active material greatly fluctuates. Therefore, the calculation of the inter-particle porosity of the negative electrode active material in the present disclosure is performed on the negative electrode taken out from the battery before being charged and discharged, or on the negative electrode taken out from the battery after one to five charge-discharge cycles (on the battery after five charge-discharge cycles in each of the examples and the comparative examples).

### [Evaluation of Adhesion]

The negative electrode was taken out from the test cell of each of the examples and the comparative examples, and a 90-degree tensile test was performed using a Tensilon universal material testing machine (RTG-1225) to measure an adhesive strength between the first negative electrode mixture layer and the second negative electrode mixture layer.

### [Evaluation of Capacity Retention Rate]

Under an environmental temperature of 25°C, the test cell of each of the examples and the comparative examples was charged at a constant current of 1 C until 4.2 V is reached, and then charged at a constant voltage of 4.2 V until 1/50 C is reached. Thereafter, the test cell was discharged at a constant current of 0.5 C until 2.5 V is reached. This charging/discharging was defined as one cycle, and 200 cycles were performed. A capacity retention rate during the charge-discharge cycle of the test cell of each of the examples and the comparative examples was determined by the following equation. Capacity retention rate (%) = (discharging capacity at 200th cycle/discharging capacity at 1st cycle) × 100

Table 1 summarizes the results of the adhesive strength between the first negative electrode mixture layer and the second negative electrode mixture layer and the capacity retention rate of the test cell in each of the examples and the comparative examples. Regarding the adhesive strength, the result of Example 1 was set to 100 (reference value), and the results of the other examples and the comparative examples were indicated as relative values.

**[Table 1]**

| | Negative electrode mixture layer | | | | | | | Evaluation results | |
|---|---|---|---|---|---|---|---|---|---|
| | Graphite ratio (Particles A : Particles B) | | First layer Particle size (µm) | | Thickness ratio Second layer : First layer | Particle size ratio (M2/M1) | Inter-particle porosity (S2/S1) | Adhesive strength | Capacity retention rate [%] |
| | Second layer | First layer | Particles M1 | Particles M2 | | | | | |
| Example 1 | 34:66 | 100:0 | 24 | 12 | 3.5:6.5 | 0.5 | 3.5 | 100 | 72 |
| Example 2 | 25:75 | 100:0 | 24 | 8 | 3.5:6.5 | 0.33 | 3.9 | 93 | 72 |
| Example 3 | 0:100 | 100:0 | 24 | 8 | 3.5:6.5 | 0.33 | 5.0 | 86 | 70 |
| Example 4 | 34:66 | 100:0 | 24 | 8 | 3.5:6.5 | 0.33 | 3.6 | 103 | 73 |
| Example 5 | 34:66 | 100:0 | 24 | 4 | 3.5:6.5 | 0.17 | 3.7 | 104 | 72 |
| Comparative Example 1 | 50:50 | 50:50 | 24 | *24 | 3.5:6.5 | 1.00 | 1.0 | 110 | 55 |
| Comparative Example 2 | 60:40 | 100:0 | 24 | - | 3.5:6.5 | - | 1.7 | 108 | 65 |
| Comparative Example 3 | 34:66 | 100:0 | 24 | - | 3.5:6.5 | - | 3.3 | 95 | 67 |
| Comparative Example 4 | 25:75 | 100:0 | 24 | - | 3.5:6.5 | - | 3.8 | 84 | 66 |
| Comparative Example 5 | 0:100 | 100:0 | 24 | - | 3.5:6.5 | - | 4.8 | 74 | 63 |
| Comparative Example 6 | 34:66 | 100:0 | 24 | 18 | 3.5:6.5 | 0.75 | 3.4 | 96 | 68 |
| Comparative Example 7 | 34:66 | 100:0 | 24 | 2 | 3.5:6.5 | 0.08 | 3.8 | 105 | 66 |

| | | | | | | | | | |
|---|---|---|---|---|---|---|---|---|---|
| Second layer: second negative electrode mixture layer, First layer: first negative electrode mixture layer Particles A: graphite particles A, Particles B: graphite particles B Particles M1: graphite particles M1, Particles M2: graphite particles M2 *24: particle size of graphite particles B | | | | | | | | | |

In all of the test cells of Examples 1 to 5, the capacity retention rates were improved as compared with those of the test cells of Comparative Examples 1 to 7. Therefore, it can be said that a deterioration in charge-discharge cycle characteristic can be suppressed, by setting the ratio (A2/A1) of the volume-average particle size (A2) of the negative electrode active material M2 to the volume-average particle size (A1) of the negative electrode active material M1 contained in the first negative electrode mixture layer in the range of 0.16 to 0.5, and setting the ratio (S2/S1) of the inter-particle porosity (S2) of the negative electrode active material in the second negative electrode mixture layer to the inter-particle porosity (S1) of the negative electrode active material in the first negative electrode mixture layer in the range of 3.5 to 5.0, as in the test cells of the examples. This is considered to be because the permeability of the electrolytic solution into the negative electrode mixture layer was improved by setting A2/A1 and S2/S1 within the above-described ranges. In addition, when comparing an example and a comparative example between which the mixed ratio of the graphite particles in the negative electrode mixture layer is the same (e.g., comparison between Example 1 and Comparative Example 3, comparison between Example 2 and Comparative Example 4, comparison between Example 3 and Comparative Example 5, and comparison between Examples 4 and 5 and Comparative Example 6), in each of the examples in which A2/A1 satisfies the above-described range, the adhesive strength between the first negative electrode mixture layer and the second negative electrode mixture layer was improved as compared with that in each of the comparative examples. Therefore, it is presumed that when A2/A1 and S2/S1 satisfy the above-described ranges, not only the permeability of the electrolytic solution into the negative electrode mixture layer, but also the adhesive strength between the first negative electrode mixture layer and the second negative electrode mixture layer is improved, and these synergistic effects suppress a deterioration in charge-discharge cycle characteristic. In Comparative Example 7, when compared to Examples 4 and 5 in which the mixed ratio of the graphite particles in the negative electrode mixture layer is the same, the adhesive strength was higher, but A2/A1 was too small, and the permeability of the electrolytic solution was poor, resulting in a lower capacity retention rate than those in Examples 4 and 5.

### <Supplementary Notes>

(1) A non-aqueous electrolyte secondary battery including a positive electrode, a negative electrode, and a non-aqueous electrolyte,
   in which the negative electrode includes a negative electrode current collector, and a negative electrode mixture layer formed on a surface of the negative electrode current collector,
   the negative electrode mixture layer includes a first negative electrode mixture layer disposed on the negative electrode current collector, and a second negative electrode mixture layer disposed on the first negative electrode mixture layer,
   the first negative electrode mixture layer and the second negative electrode mixture layer contain a negative electrode active material,
   the negative electrode active material in the first negative electrode mixture layer has two negative electrode active materials M1 and M2 having different volume-average particle sizes, and a ratio (A2/A1) of the volume-average particle size (A2) of the negative electrode active material M2 to the volume-average particle size (A1) of the negative electrode active material M1 is in a range of 0.16 to 0.5, and
   a ratio (S2/S1) of an inter-particle porosity (S2) of the negative electrode active material in the second negative electrode mixture layer to an inter-particle porosity (S1) of the negative electrode active material in the first negative electrode mixture layer is in a range of 3.5 to 5.0.
(2) The non-aqueous electrolyte secondary battery according to (1), in which the negative electrode active material in the second negative electrode mixture layer contains graphite particles, and the negative electrode active materials M1 and M2 in the first negative electrode mixture layer are graphite particles.
(3) The non-aqueous electrolyte secondary battery according to (1) or (2), in which the negative electrode active material contained in the negative electrode mixture layer includes a Si-based material.
(4) The non-aqueous electrolyte secondary battery according to (3), in which the Si-based material includes SiOₓ (0.5 ≤ x ≤ 1.6), and a ratio of the SiOₓ (0.5 ≤ x ≤ 1.6) to a total mass of the negative electrode active material contained in the negative electrode mixture layer is greater than or equal to 1 mass% and less than or equal to 10 mass%.
(5) The non-aqueous electrolyte secondary battery according to any one of (1) to (4), in which the volume-average particle size of the negative electrode active material M1 is in a range of 15 µm to 30 µm.
(6) The non-aqueous electrolyte secondary battery according to any one of (1) to (5), in which a ratio of a thickness of the second negative electrode mixture layer to a thickness of the first negative electrode mixture layer is 2:8 to 5:5.
(7) The non-aqueous electrolyte secondary battery according to any one of (1) to (6), in which a sum of a thickness of the first negative electrode mixture layer and a thickness of the second negative electrode mixture layer is in a range of 75 µm to 300 µm.

### REFERENCE SIGNS LIST

- 10: Non-aqueous electrolyte secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket
- 30: Negative electrode current collector
- 32: Negative electrode mixture layer
- 40: Negative electrode active material
- 42, 44: Pore

## Claims

1. A non-aqueous electrolyte secondary battery comprising a positive electrode, a negative electrode, and a non-aqueous electrolyte,
wherein the negative electrode includes a negative electrode current collector, and a negative electrode mixture layer formed on a surface of the negative electrode current collector,
the negative electrode mixture layer includes a first negative electrode mixture layer disposed on the negative electrode current collector, and a second negative electrode mixture layer disposed on the first negative electrode mixture layer,
the first negative electrode mixture layer and the second negative electrode mixture layer contain a negative electrode active material,
the negative electrode active material in the first negative electrode mixture layer has two negative electrode active materials M1 and M2 having different volume-average particle sizes, and a ratio (A2/A1) of the volume-average particle size (A2) of the negative electrode active material M2 to the volume-average particle size (A1) of the negative electrode active material M1 is in a range of 0.16 to 0.5, and
a ratio (S2/S1) of an inter-particle porosity (S2) of the negative electrode active material in the second negative electrode mixture layer to an inter-particle porosity (S1) of the negative electrode active material in the first negative electrode mixture layer is in a range of 3.5 to 5.0.

2. The non-aqueous electrolyte secondary battery according to claim 1, wherein the negative electrode active material in the second negative electrode mixture layer contains graphite particles, and the negative electrode active materials M1 and M2 in the first negative electrode mixture layer are graphite particles.

3. The non-aqueous electrolyte secondary battery according to claim 1 or 2, wherein the negative electrode active material contained in the negative electrode mixture layer includes a Si-based material.

4. The non-aqueous electrolyte secondary battery according to claim 3, wherein the Si-based material includes SiOₓ (0.5 ≤ x ≤ 1.6), and a ratio of the SiOₓ (0.5 ≤ x ≤ 1.6) to a total mass of the negative electrode active material contained in the negative electrode mixture layer is greater than or equal to 1 mass% and less than or equal to 10 mass%.

5. The non-aqueous electrolyte secondary battery according to claim 1 or 2, wherein the volume-average particle size of the negative electrode active material M1 is in a range of 15 µm to 30 µm.

6. The non-aqueous electrolyte secondary battery according to claim 1 or 2, wherein a ratio of a thickness of the second negative electrode mixture layer to a thickness of the first negative electrode mixture layer is 2:8 to 5:5.

7. The non-aqueous electrolyte secondary battery according to claim 1 or 2, wherein a sum of a thickness of the first negative electrode mixture layer and a thickness of the second negative electrode mixture layer is in a range of 75 µm to 300 µm.
